# FASCICULE DE BREVET EUROPEEN

(11) **EP 1 613 523 B1**
(45) Date de publication et mention de la délivrance du brevet: **15.07.2009**
(21) Numéro de dépôt: 03796180.2
(22) Date de dépôt: 05.12.2003
(51) Int. Cl.: B62D 25/24

(54) **FEUILLE D'ETANCHEITE ET D'INSONORISATION POUR UN ELEMENT DE CARROSSERIE**
DICHTUNGSTEIL FÜR EIN IN EINER WAND AUSGEBILDETES LOCH
SEALING PIECE FOR A HOLE FORMED IN A WALL

(30) Priorité: 07.01.2003 FR 0300117
(43) Date de publication de la demande: 11.01.2006
(73) Titulaire: Sofitec SA, 78530 Buc (FR)
(72) Inventeur: PROUX, Georges, F-78220 Viroflay (FR)
(74) Mandataire: Cabinet Bloch & Gevers
(86) Numéro de dépôt international: PCT/FR2003/003609
(87) Numéro de publication internationale: WO 2004/069634

(56) Documents cités:
- EP-A- 1 083 116
- US-A- 2 396 035
- US-A- 4 413 748
- US-A- 5 224 624
- US-A- 5 852 854

## Description

L'invention concerne une pièce d'obturation d'un orifice formé dans une paroi, notamment dans une tôle de porte de véhicule automobile, l'obturation de l'orifice ayant pour but d'empêcher le passage d'eau, de poussière et de bruit par cet orifice.

Dans la technique actuelle, les pièces d'obturation' sont montées par clipsage ou encliquetage dans les orifices à obturer et comportent pour cela, à leur périphérie, des saillies formant des pattes ou des crans élastiquement déformables qui sont repoussés vers l'intérieur des pièces à leur passage dans les orifices et qui se détendent élastiquement vers l'extérieur au-delà des orifices dans leur position d'obturation.

On a constaté toutefois que cette obturation ne suffisait pas à empêcher totalement les infiltrations d'eau, l'eau ayant tendance à ruisseler sur la paroi jusqu'à l'orifice, puis à s'écouler comme dans une gouttière autour de la partie de la pièce qui traverse l'orifice et à ressortir de cette gouttière d'un côté et de l'autre de la paroi en passant entre les crans ou les pattes d'encliquetage.

Le brevet US 5 852 854 divulgue un bouchon cylindrique constituant une pièce d'obturation d'un orifice selon le préambule de la revendication 1. Une extrémité en crochet du bouchon a un diamètre sensiblement égal à celui de l'orifice et est creuse afin que l'extrémité en crochet puisse être resserrée par frottement contre la paroi de l'orifice et traverser l'orifice lorsque le bouchon est poussé sur l'extérieur du fond dans l'orifice jusqu'à ce que le fond bute contre la paroi 3 devant l'orifice en écrasant le cordon. Le bouchon est donc introduit dans l'orifice en présentant l'extrémité ouverte en crochet par un côté intérieur accessible de la paroi, telle qu'une tôle de porte de véhicule automobile, jusqu'à ce que l'extrémité ouverte en crochet du bouchon ressorte du côté extérieur inaccessible de la paroi. L'intérieur du bouchon vers la face intérieure du fond est donc ouvert vers le côté extérieur inaccessible de la paroi et est exposé à de la stagnation d'eau et de poussière ce qui peut provoquer une détérioration du bouchon.

La présente invention a notamment pour but d'apporter une solution simple, satisfaisante et économique à ces problèmes.

Elle propose à cet effet une pièce d'obturation d'un orifice formé dans une paroi telle par exemple qu'une tôle de porte de véhicule automobile, cette pièce étant telle que caractérisée dans la revendication.

Lorsque la pièce selon l'invention est montée dans l'orifice de la paroi, le cordon de matière d'étanchéité et/ou de collage qui s'étend de façon continue le long du bord de l'orifice s'oppose à tout passage d'eau, de poussière et de bruit par cet orifice. L'obturation de l'orifice par la pièce selon l'invention est ainsi totale.

La matière d'étanchéité ou de collage peut être de tout type approprié, et est par exemple en caoutchouc butyle ou en polyuréthanne.

La forme de la pièce selon l'invention peut être quelconque, à contour circulaire ou polygonal, par exemple carré ou rectangulaire.

Le fond de la pièce selon l'invention comporte avantageusement des nervures de rigidification, qui facilitent son clipsage ou encliquetage élastique dans l'orifice précité, notamment quand elle est réalisée en une matière relativement mince et déformable.

Le fond peut comporter aussi une nervure centrale creuse, qui est destinée à être pincée pour faciliter le montage de la pièce dans l'orifice précité, le pincement de cette nervure ayant pour effet de rapprocher légèrement les bords de la pièce qui sont situés de part et d'autre de la nervure parallèlement à celle-ci.

Le fond peut comporter également deux nervures parallèles définissant entre elles une rainure de maintien d'un élément allongé, tel par exemple qu'un câble ou une baguette de rigidification.

La pièce selon l'invention est avantageusement réalisée en matière plastique cellulaire, par exemple en mousse de polyoléfine ou de polyuréthanne. En variante, elle peut aussi être réalisée en matière plastique compacte ou en matière fibreuse. Elle peut encore comporter plusieurs couches de matières différentes, par exemple une feuille en mousse de polyoléfine associée à un film plastique ou à une couche de matière fibreuse.

De façon générale, l'invention s'applique aussi bien à des pièces de petite dimension qu'à des pièces ayant des dimensions moyennes ou importantes.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'une pièce selon l'invention ;
- la figure 2 est une vue schématique en coupe axiale de cette pièce montée dans un orifice d'une paroi ;
- la figure 3 est une vue schématique de face d'une autre pièce selon l'invention ;
- la figure 4 est une vue schématique de face d'encore une autre pièce selon l'invention ;
- la figure 5 est une vue schématique en coupe de la pièce de la figure 4 ;
- la figure 6 est une vue schématique de face d'une variante de réalisation de la pièce selon l'invention ;
- la figure 7 est une vue schématique en coupe de la pièce de la figure 6.

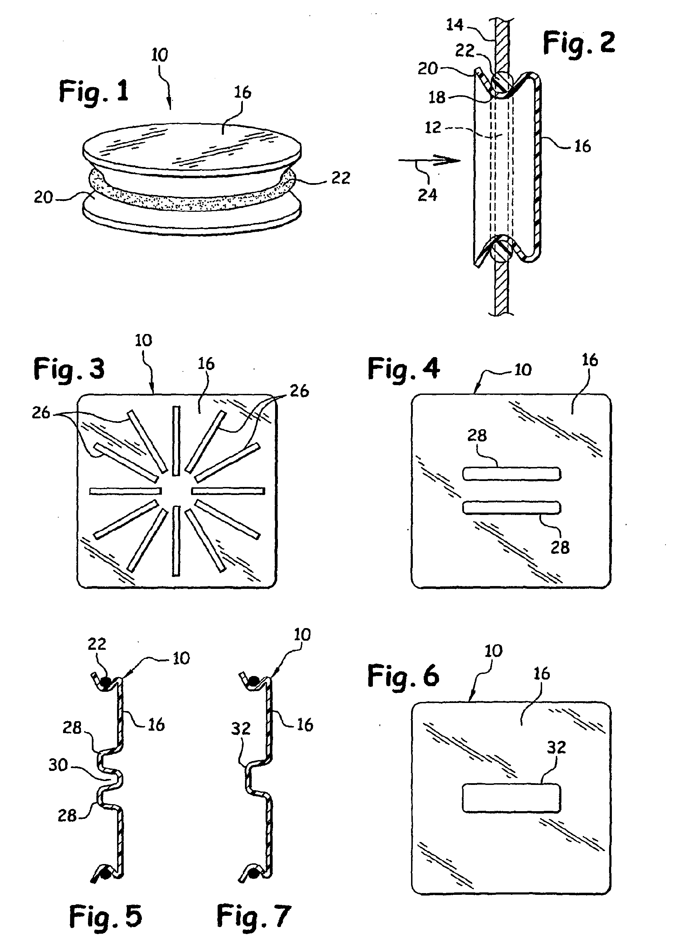

On se réfère d'abord aux figures 1 et 2 représentant une pièce 10 selon l'invention qui est de forme générale cylindrique à section circulaire pour l'obturation d'un orifice circulaire 12 formé dans une paroi 14, telle par exemple qu'une tôle intérieure de porte de véhicule automobile. La pièce 10 est formée par exemple d'une feuille mince de matière plastique cellulaire, telle qu'une mousse de polyoléfine ou de polyuréthanne, ayant une épaisseur de l'ordre de 0,5 millimètre, et comporte un fond 16 en forme de disque et une paroi cylindrique 18 en forme de gorge de poulie se terminant par un rebord 20 orienté en oblique et s'élargissant vers son extrémité libre.

La gorge annulaire formée par la paroi 18 et le rebord 20 sont ici de forme circulaire continue, mais ils pourraient comporter de petites discontinuités locales.

Un cordon 22 d'une matière d'étanchéité et/ou de collage, qui est d'un type pâteux ou déformable, est logé dans la gorge annulaire de la paroi 18 et s'étend de façon continue tout le long de cette gorge.

Le montage de la pièce 10 dans l'orifice 12 s'effectue en poussant la pièce dans l'orifice du côté intérieur de la porte, dans le sens indiqué par la flèche 24, jusqu'à ce que le fond 16 de la pièce ressorte du côté extérieur de la paroi 14, comme représenté en figure 2.

L'orifice 12 a un diamètre inférieur au diamètre extérieur du fond 16 et légèrement supérieur au diamètre extérieur de la gorge de la paroi 18, de sorte que le bord de l'orifice 12 vient s'engager dans le cordon 22 de façon continue. Comme le cordon 22 est lui-même continu, il obture de façon étanche tout espace libre qui pourrait subsister entre la paroi 18 de la pièce 10 et le bord de l'orifice 12 et s'oppose ainsi efficacement à tout passage d'eau, de poussière et de bruit par cet orifice.

Lorsque de l'eau ruisselle sur la face extérieure de la paroi 14, cette eau peut s'écouler dans la gorge annulaire formée par la paroi 18, mais ne peut passer de l'autre côté de cette paroi.

Dans les variantes de réalisation des figures 3 à 7, la pièce 10 selon l'invention comporte un fond rectangulaire ou carré, correspondant à la forme de l'orifice à obturer dans une paroi.

En figure 3, le fond 16 de la pièce 10 comporte des nervures 26 de rigidification, qui sont orientées radialement du centre du fond 16 vers sa périphérie. Ces nervures de rigidification facilitent le montage et le maintien de la pièce 10 dans l'orifice qu'elle doit obturer et sont particulièrement utiles quand la pièce 10 est formée d'une feuille mince d'une matière relativement souple.

Dans les figures 4 et 5, le fond 16 de la pièce 10 est formé avec deux nervures 28 parallèles qui sont en saillie du côté intérieur, ces deux nervures définissant entre elles une rainure 30 dans laquelle on peut engager un élément allongé tel par exemple qu'un câble ou qu'une baguette de rigidification.

Bien entendu, ces nervures 28 peuvent être formées en saillie sur un côté ou sur l'autre du fond 16.

Dans les figures 6 et 7, le fond 16 de la pièce 10 est formé avec une nervure creuse 32 qui s'étend parallèlement à deux bords du fond 16. Quand on pince la nervure 32 avec les doigts, on rapproche légèrement l'un de l'autre les deux bords du fond 16, ce qui facilite le clipsage ou encliquetage élastique de ce fond dans l'orifice 12 de la paroi 14.

Les pièces d'obturation selon l'invention peuvent avoir des dimensions relativement importantes et permettent une très bonne obturation d'orifices de dimensions relativement importantes.

## Revendications

1. Pièce d'obturation d'un orifice formé dans une paroi telle par exemple qu'une tôle de porte de véhicule automobile, la pièce (10) comportant un fond (16), une paroi périphérique (18), une gorge continue ou sensiblement continue destinée à s'engager sur le bord de l'orifice (12), et un cordon continu (22) d'une matière d'étanchéité et/ou de collage déposé dans la gorge (18) pour réaliser une étanchéité continue le long du bord de l'orifice (12), **caractérisée en ce que** la gorge forme la paroi périphérique (18) et le fond (16) présente une souplesse et un contour tels que le fond est apte à traverser l'orifice (12) lorsque la pièce (10) est poussée par l'intérieur du fond dans l'orifice jusqu'à ce que le fond (16) ressorte de l'orifice et le bord de l'orifice (12) vienne s'engager dans le cordon (22).

2. Pièce selon la revendication 1, **caractérisée en ce que** la matière d'étanchéité et/ou de collage est d'un type pâteux ou déformable.

3. Pièce selon la revendication 1 ou 2, **caractérisée en ce que** le cordon (22) est en en caoutchouc butyle ou en polyuréthanne.

4. Pièce selon l'une des revendications précédentes, **caractérisée en ce qu'**elle est à contour circulaire ou polygonal, par exemple carré ou rectangulaire.

5. Pièce selon l'une des revendications précédentes, **caractérisée en ce que** le fond (16) comporte des nervures (26) de rigidification.

6. Pièce selon l'une des revendications précédentes, **caractérisée en ce que** le fond (16) comporte une nervure centrale creuse (32) destinée à être pincée pour le montage de la pièce dans l'orifice (12) précité.

7. Pièce selon l'une des revendications précédentes, **caractérisée en ce que** le fond (16) comporte deux nervures parallèles (28) définissant entre elles une rainure (30) de maintien d'un élément allongé, tel par exemple qu'un câble ou une baguette de rigidification.

8. Pièce selon l'une des revendications précédentes, **caractérisée en ce qu'**elle comprend au moins une feuille de matière plastique cellulaire, par exemple en polyoléfine ou polyuréthanne.

9. Pièce selon l'une des revendications précédentes, **caractérisée en ce qu'**elle comprend une couche de matière fibreuse.

10. Pièce selon l'une des revendications précédentes, **caractérisée en ce qu'**elle comprend un film de matière plastique.

## Claims

1. An piece for plugging an orifice formed in a wall such as, for example, the door sheet of an automobile vehicle, the piece (10) comprising a bottom part (16), a continuous or substantially continuous periphery (18), intended to engage the edge of the orifice (12), and a continuous cord (22) of a sealing and/or gluing material arranged in the groove (18) for ensuring a continuous tightness along the edge of the orifice (12), **characterized in that** the groove forms the peripheral wall (18) and the bottom part (16) has some flexibility and a contour such that the bottom part is able to cross the orifice (12) when the piece 510) is pushed by the interior part of the bottom part in the orifice until the bottom part (16) comes out of the orifice and the edge of the orifice (12) engages the cord (22).

2. A piece according to claim 1, **characterized in that** the sealing and/or gluing material is of a pasty or distortable type.

3. A piece according to claim 1 or 2, **characterized in that** the cord (22) is made in a butyl rubber or in polyurethane.

4. A piece according to any of previous claims, **characterized in that** it has a circular or polygonal contour, for example, a square or rectangular contour.

5. A piece according to any of previous claims, **characterized in that** the bottom part (16) comprises stiffening ribs (26).

6. A piece according to any of previous claims, **characterized in that** the bottom part (16) comprises a central rib (32) able to be pinched for mounting the piece in the above mentioned orifice (12).

7. A piece according to any of previous claims, **characterized in that** the bottom part (16) comprises two parallel ribs (28) defining therebetween a holding groove (30) for maintaining an oblong member, such as for example a cable or a stiffening rod.

8. A piece according to any of previous claims, **characterized in that** it comprises at least one sheet made of a cellular plastic material, for example, made of polyolefin or polyurethane.

9. A piece according to any of previous claims, **characterized in that** it comprises a layer of fibrous material.

10. A piece according to any of previous claims, **characterized in that** it comprises a plastic material film.

## Patentansprüche

1. Teil zum Verschließen einer Öffnung, die in einer Wand wie beispielsweise einem Türblech eines Kraftfahrzeugs gebildet ist, wobei das Teil (10) einen Boden (16), eine umlaufende Wand (18), eine durchgehende oder im Wesentlichen durchgehende Rinne, die dazu bestimmt ist, in den Rand der Öffnung (12) zu fassen, und ein durchgehendes Band (22) aus einem abdichtenden und/oder verklebenden Stoff, das in die Rinne (18) gelegt wird, um entlang des Randes der Öffnung (12) eine durchgehende Dichtigkeit herzustellen, aufweist, **dadurch gekennzeichnet, dass** die Rinne die umlaufende Wand (18) bildet und der Boden (16) eine Geschmeidigkeit und eine Kontur aufweist, die derart beschaffen sind, der Boden dazu geeignet ist, durch die Öffnung (12) gelangen, wenn das Teil (10) über dass Innere des Bodens in die Öffnung gedrückt wird, bis der Boden (16) wieder aus der Öffnung herauskommt und der Rand der Öffnung (12) in das Band (22) fasst.

2. Teil nach Anspruch 1, **dadurch gekennzeichnet, dass** der abdichtende und/oder verklebende Stoff von pastöser oder verformbarer Art ist.

3. Teil nach Anspruch 1 oder 2, **dadurch gekennzeichnet, dass** das Band (22) aus Butylkautschuk oder aus Polyurethan ist.

4. Teil nach einem der vorhergehenden Ansprüche, **dadurch gekennzeichnet, dass** es eine kreisförmige oder polygonale, beispielsweise quadratische oder rechteckige, Kontur aufweist.

5. Teil nach einem der vorhergehenden Ansprüche, **dadurch gekennzeichnet, dass** der Boden (16) Rippen (26) zur Versteifung aufweist.

6. Teil nach einem der vorhergehenden Ansprüche, **dadurch gekennzeichnet, dass** der Boden (16) eine mittige Hohlrippe (32) aufweist, die dazu bestimmt ist, zusammengekniffen zu werden, um das Teil in die oben genannte Öffnung (12) einzufügen.

7. Teil nach einem der vorhergehenden Ansprüche, **dadurch gekennzeichnet, dass** der Boden (16) zwei parallele Rippen (28) aufweist, die eine dazwischen gelegene Nut (30) zum Halten eines länglichen Elements, wie beispielsweise eines Kabels oder Stabs zur Versteifung, begrenzen.

8. Teil nach einem der vorhergehenden Ansprüche, **dadurch gekennzeichnet, dass** es mindestens eine Folie aus einem Kunststoff mit Zellstruktur, beispielsweise aus Polyolefin oder Polyurethan, umfasst.

9. Teil nach einem der vorhergehenden Ansprüche, **dadurch gekennzeichnet, dass** es eine Schicht aus einem faserigen Stoff umfasst.

10. Teil nach einem der vorhergehenden Ansprüche, **dadurch gekennzeichnet, dass** es eine Dünnschicht aus Kunststoff umfasst.
